Europäisches Patentamt

European Patent Office

Office européen des brevets

(19)

(11) **EP 0 809 348 B1**

(12) **FASCICULE DE BREVET EUROPEEN**

(45) Date de publication et mention
de la délivrance du brevet:
**31.07.2002 Bulletin 2002/31**

(51) Int Cl.⁷: **H02M 3/335**

(21) Numéro de dépôt: **97401028.2**

(22) Date de dépôt: **07.05.1997**

(54) **Alimentation continue à découpage, à limitation de courant**

Gleichstrom-Schaltnetzteil mit Strombegrenzung

DC voltage switching power supply with current limitation

(84) Etats contractants désignés:
**DE FR GB IT**

(30) Priorité: **21.05.1996 FR 9606275**

(43) Date de publication de la demande:
**26.11.1997 Bulletin 1997/48**

(73) Titulaire: **Thales**
**75008 Paris (FR)**

(72) Inventeurs:
• **Bernard, Claude, THOMSON-CSF S.C.P.I.**
**94117 Arcueil Cedex (FR)**
• **Cadinot, Didier, THOMSON-CSF S.C.P.I.**
**94117 Arcueil Cedex (FR)**
• **Petit, Daniel, THOMSON-CSF S.C.P.I.**
**94117 Arcueil Cedex (FR)**
• **Straub, Michel, THOMSON-CSF S.C.P.I.**
**94117 Arcueil Cedex (FR)**

(74) Mandataire: **Courtellemont, Alain et al**
**Thomson-CSF Propriété Intellectuelle,**
**13, Avenue du Président Salvador Allende**
**94117 Arcueil Cédex (FR)**

(56) Documents cités:
**US-A- 4 811 184**

## Description

La présente invention concerne le domaine des alimentations continues à découpage et en particulier des alimentations à découpage, à limitation de courant, utilisées avec une charge dont la valeur peut varier ; elle concerne également la protection de telles alimentations contre les courts-circuits.

Lorsque l'énergie fournie par une alimentation doit pouvoir atteindre une valeur de crête donnée, il est classique de dimensionner cette alimentation de telle sorte que sa puissance nominale, généralement définie à 1 dB de compression, corresponde à cette valeur de crête.

Lorsque cette valeur de crête n'est atteinte que pendant des instants très courts et que, pendant le reste du temps de fonctionnement, l'alimentation n'a à fournir qu'une énergie relativement plus faible, il est frustrant et coûteux de devoir employer, du fait de ces très courts instants de fonctionnement à forte puissance, une alimentation sur-dimensionnée en régime normal.

On connaît d'après le document US-A-4 811 184 un dispositif de limitation de courant pour alimentation à découpage nécessitant pour son fonctionnement des signaux extérieurs de synchronisation.

Le but de la présente invention est d'éviter ou, pour le moins, de réduire cet inconvénient dans le cas des alimentations continues à découpage.

Pour y parvenir il est proposé d'autoriser l'utilisation de l'alimentation au-dessus de sa puissance nominale pendant de très brefs instants, de séparer ces très brefs instants par des intervalles de temps pendant lesquels l'alimentation est utilisée, au plus, à sa puissance nominale et d'assortir ce fonctionnement de conditions : - limitation, pendant les très brefs instants, de la puissance disponible à une valeur telle que, même si des composants de l'alimentation atteignent des températures relativement élevées, ils ne soient pas détériorés - durée des intervalles de temps suffisante pour permettre aux composants qui ont atteint une température relativement élevée, de revenir à une température normale de fonctionnement.

La présente invention a pour objet des alimentations telles que décrites dans les revendications.

Il est à noter que selon le brevet US-A-4 811 184 il est proposé, avec une alimentation à découpage, d'autoriser une surcharge en courant de très courte durée par rapport au régime normal de fonctionnements ; mais dans ce document, l'autorisation de surcharge est donnée à partir d'un signal de synchronisation extérieur, prédéfini en fonction de la variation de charge.

La présente invention décrite à l'aide de la description ci-après et des figures s'y rapportant qui représentent :

- la figure 1, un schéma de principe d'une alimentation selon l'art connu,
- la figure 2, des signaux à obtenir

- la figure 3, un schéma détaillé qui montre comment modifier, selon l'invention, l'alimentation de la figure 1.

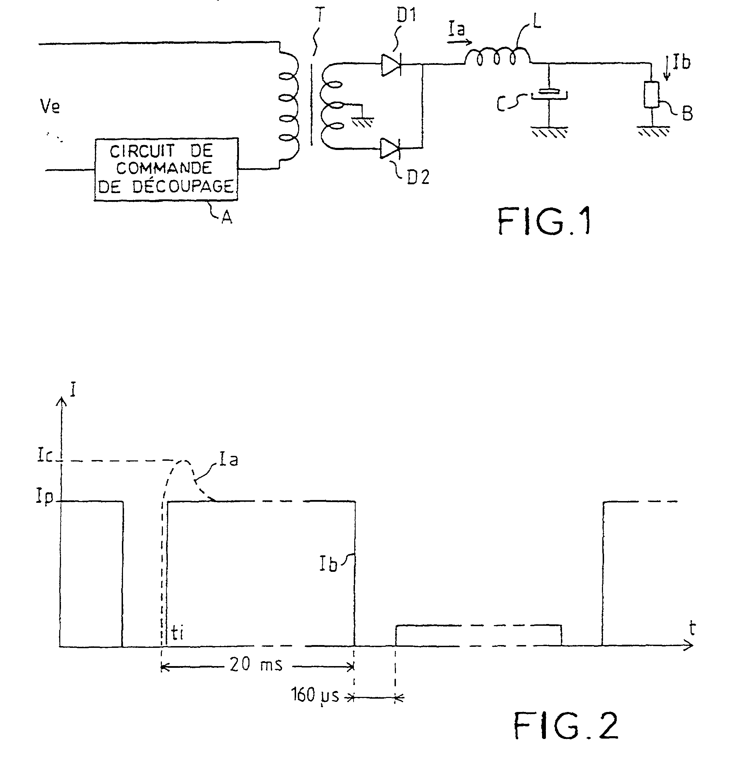

La figure 1 représente une alimentation continue à découpage avec ses bornes d'entrée sur lesquelles est appliquée une tension d'entrée en créneaux, Ve, et, entre les deux bornes d'entrée, le primaire d'un transformateur T, en série avec un circuit de commande de découpage, A ; le circuit de commande de découpage est un circuit classique et, dans l'exemple décrit, ce circuit comporte en association un circuit MOTOROLA portant la référence SG3526 et un circuit de mesure de courant ; le circuit SG3526 réalise un découpage, dans le temps, des demi-périodes de la tension Ve en fonction de la valeur du courant mesuré.

Le transformateur T comporte un secondaire à point milieu dont le point milieu est relié à la masse et dont les deux extrémités sont respectivement reliées aux anodes de deux diodes D1, D2. Les cathodes de ces deux diodes sont reliées entre elles et couplées, à travers un filtre passe-bas, à la première extrémité d'une charge B dont la seconde extrémité est reliée à la masse ; le filtre passe-bas comporte une inductance L branchée entre le point commun aux diodes D1, D2, et un condensateur C monté en parallèle sur la charge B. Le circuit de redressement constitué des éléments T, D1 et D2, fournit un courant, Ia, au filtre passe-bas et ce courant qui traverse l'inductance L, se divise en deux parties dont l'une, Ib, constitue le courant dans la charge B.

Dans le cas de l'exemple décrit l'alimentation sert à fournir l'énergie nécessaire à l'amplification d'un signal image en télévision au standard français norme "L". C'est-à-dire que, dans cet exemple, la charge B de la figure 1 est une charge variable et que le courant Ib à lui fournir peut être représenté schématiquement, en fonction du temps, par la courbe en traits forts du graphique de la figure 2, avec des tops trame de 160µs et une période trame de 20ms. Pour obtenir un tel courant Ib dans la charge il faut que le courant Ia dans l'inductance L ait, pour le flanc de montée de chaque demi-image blanche, la forme indiquée en traits interrompus au début de l'une de ces demi-images blanches ; ces formes sont données sous réserve, dans cette représentation, que Ia et Ib, dans la partie de leur tracé où ils sont parallèles et écartés l'un de l'autre sont, en fait, confondus. La forme du courant Ia est due à la présence de l'inductance L qui retarde la montée du courant Ib dans la charge B, et qui nécessite donc que le courant Ia atteigne, en début de demi-image blanche, une valeur Ic plus élevée qu'en régime établi, Ip.

Or le dépassement de la valeur Ip, pour atteindre la valeur Ic puis revenir à la valeur Ip, ne dure qu'une infime fraction du temps d'une demi-image blanche. Il est donc possible d'accepter que, pendant ce régime transitoire au cours duquel l'alimentation fournit un courant Ia supérieur à la valeur Ip, certains des composants

atteignent des températures supérieures à celles qu'ils peuvent atteindre lors d'un fonctionnement en régime établi ; un tel fonctionnement est acceptable sous réserve que deux conditions soient remplies afin d'éviter une détérioration du matériel : - les températures atteintes en régime transitoire doivent pouvoir être supportées sans dommages, par les composants concernés, jusqu'au retour à des températures de régime établi, - le retour à des températures normales de fonctionnement en régime établi doit se faire, en tout état de cause, au plus tard en fin de trame pour les cas de deux demi-images blanches consécutives.

En fait il s'agit de réaliser un compromis entre différentes valeurs: celle du courant lp qui doit permettre un retour à la température de régime établi, celle du courant lc et de la durée du régime transitoire qui sont liées pour obtenir le courant lb tel que désiré en début de demi-image blanche, et celle du temps à ne pas dépasser pour revenir à des températures normales de fonctionnement en régime établi ; et ces valeurs sont à choisir en fonction de ceux des composants de l'alimentation qui sont les plus susceptibles de chauffer en régime transitoire, c'est-à-dire lors du dépassement du courant lp. En règle général le courant lp ne sera pris que légèrement inférieur au courant maximum à ne pas dépasser en régime établi. Quant aux valeurs du courant lc, de la durée du régime transitoire et du temps nécessaire pour le retour à des températures normales de fonctionnement, les deux premières déterminant la troisième, il s'agit de les choisir, de préférence, pour une utilisation optimum de l'alimentation, à savoir une utilisation aussi proche que possible de ses possibilités lors d'un fonctionnement en régime établi, ce régime établi étant à considérer lors d'une demi-image blanche.

Dans l'exemple décrit le rapport lc/lp vaut 1,3 , la durée du régime transitoire est de 220 µs et le retour, après régime transitoire, à des températures normales de régime établi se fait environ en 10 ms.

Le problème est donc, avec une alimentation à découpage qui comporte déjà un premier seuil de limitation de courant qui détermine la valeur lp selon la figure 2, de munir cette alimentation d'un second seuil de limitation supérieur au premier, ne pouvant être atteint que pendant une durée brève devant la durée d'une trame et qui ne doit pas pouvoir être utilisé plus d'une fois par trame afin d'éviter les risques d'échauffement lors d'une utilisation anormale de l'alimentation.

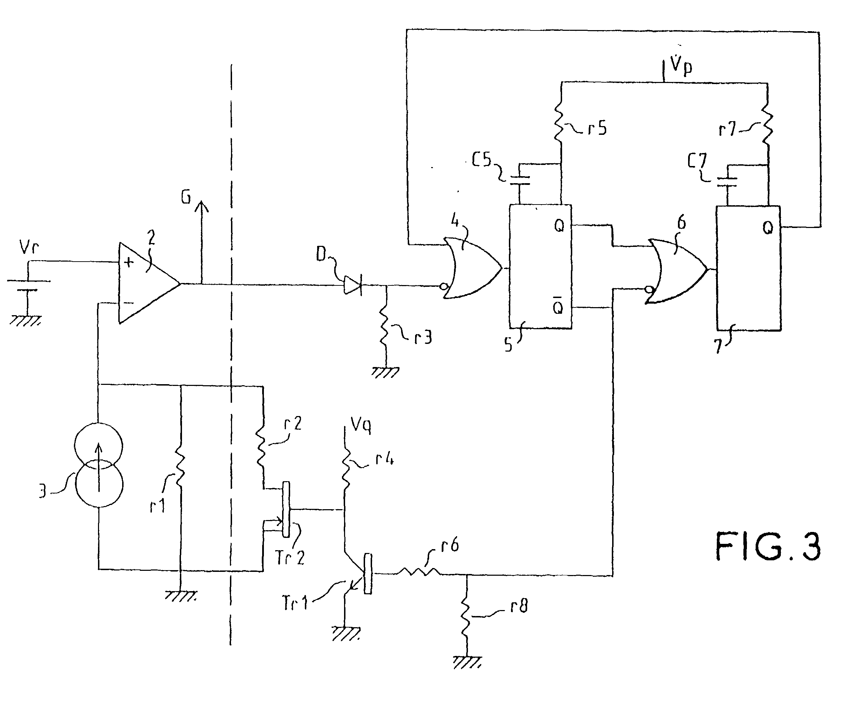

Une solution à ce problème est proposée, dans l'exemple décrit, par la modification, selon la figure 3, du circuit A de la figure 1.

Sur la figure 3, à gauche d'une ligne verticale en traits interrompus, sont dessinés les seuls éléments du circuit de commande de découpage classique, d'origine, nécessaires à la compréhension de l'invention ; à droite de cette ligne ont été représentés les éléments ajoutés pour déterminer le second seuil de limitation.

La partie d'origine du circuit de commande de découpage est celle destinée à fournir un signal G d'inhibition du découpage, c'est-à-dire un signal qui bloque l'alimentation à découpage amenant à zéro sa tension de sortie. Cette partie d'origine comporte un comparateur de tensions 2 avec, sur l'une de ses deux entrées, une tension de préférence Vr fournie par une borne d'une source de tension dont l'autre borne est à la masse. Entre l'autre borne du comparateur 2 et la masse est branché un montage fait d'une source de courant, 3, en parallèle sur une résistance r1. La source de courant est constituée par un montage redresseur avec un transformateur comportant un primaire en série avec le primaire du transformateur T de la figure 1 et un secondaire à point milieu relié à la masse et associé à deux diodes de redressement comme le secondaire du transformateur T et les diodes D1, D2 de la figure 1 ; un tel montage redresseur, là où il est placé, fournit à la résistance r1 un courant K.la, identique, à un coefficient de proportionnalité K près, au courant la dans l'inductance L de la figure 1.

Tant que le produit K.la . r1 est inférieur à la tension de référence Vr, le comparateur 2 délivre un signal G = "1 logique" et le découpage peut s'effectuer normalement.

Si le produit K.la . r1 devient supérieur à la tension de référence Vr le comparateur 2 délivre un signal G = "O logique". Dans un circuit de commande de découpage classique, c'est-à-dire sans la partie nouvelle constituée par le montage électronique représenté sur la figure 3, à droite de la ligne verticale en traits interrompus, le découpage est alors arrêté pour la demi-période en cours de la tension d'entrée de l'alimentation.

Dans ce qui suit il va maintenant être question de ce qui se passe quand, au circuit de commande de découpage classique, est ajoutée la partie nouvelle représentée sur la figure 3 à droite de la ligne verticale en traits interrompus.

Cette partie nouvelle comporte, une diode D dont l'anode est reliée à la sortie du comparateur 2, et dont la cathode est couplée à la masse par une résistance r3 et est reliée à une entrée avec inversion d'une porte OU,4. La porte OU,4, a une sortie reliée à l'entrée de commande d'une bascule monostable 5 dont la durée de l'état quasi-stable, 220 µs dans l'exemple décrit, est déterminée par les valeurs d'une résistance r5 branchée entre un premier accès de la bascule et un point à potentiel fixe Vp, et d'un condensateur C5 branché entre le premier accès et un second accès de la bascule 5. Les sorties Q et $\bar{Q}$ de la bascule 5 sont respectivement reliées à une entrée directe et à une entrée avec inversion d'une porte OU,6, dont la sortie est reliée à l'entrée de commande d'une bascule monostable 7 ; les 10 ms que dure l'état quasi-stable de la bascule 7, dans l'exemple décrit, sont déterminées par les valeurs d'une résistance r7 branchée entre un premier accès de la bascule 7 et le point à potentiel fixe Vp, et d'un condensateur C7 branché entre le premier accès et un second accès de la bascule 7. La sortie $\bar{Q}$ de la bascule 7 est reliée à une entrée directe de la porte OU 4. La sortie $\bar{Q}$ de la bascule monostable 5 est également reliée aux premières extrémités communes de deux résistances r6, r8 dont les secondes extrémités sont reliées à la masse pour la résistance r8 et à la base d'un transistor npn, Tr1, pour la résistance r6. Le transistor Tr1 a son émetteur relié à la masse et son collecteur relié à la grille d'un transistor MOSFET, canal N, Tr2. Le transistor Tr2 a sa source reliée à la masse et son drain couplé par une résistance r2 à celle des extrémités de la résistance r1 qui n'est pas à la masse.

La partie nouvelle a pour rôle de remplacer la résistance r1 seule par les résistances r1 et r2 en parallèle pendant un temps qui sera précisé plus loin. Ce remplacement de r1 par r1 et r2 en parallèle fait que le courant qui déclenche le signal G = "1 logique" et donc l'arrêt du découpage, est augmenté dans le rapport 1 + (r1/r2) puisque, avec r1 seul, le déclenchement se fait pour

$$Vr = K.la.r1$$

et que, pour r1 et r2 en parallèle, il se fait pour

$$Vr = K.la.(r1.r2)/(r1 + r2)$$

Avec la partie nouvelle, tant que le courant la est suffisamment faible pour ne pas faire passer le comparateur 2 de la valeur "1 logique" à la valeur "O logique", la porte OU,4, a son entrée directe à O, son entrée avec inversion à 1 et donc sa sortie à 0. Les sorties Q et $\overline{Q}$ de la bascule 5 sont donc respectivement à O et 1 ce qui entraîne que la sortie Q de la bascule 7 est à O et, par le "1 logique" délivré sous la forme d'une tension positive par la sortie $\overline{Q}$ de la bascule 5, le transistor Tr1 est passant et le transistor Tr2 bloqué. Seule la résistance r1 est donc branchée sur la source de courant 3.

Les bascules monostables 5 et 7 sont déclenchées par le front du passage du "O logique" au "1 logique" du signal sur leur entrée de commande. Ainsi lorsque K.la.r1 devient supérieur à Vr le front du passage de 1 à O de la sortie du comparateur déclenche pratiquement instantanément le passage à l'état quasi-stable des deux bascules 5 et 7. Et, pendant une première durée donnée par les 220 μs de l'état quasi-stable de la bascule 5, la résistance r2 est branchée en parallèle sur la résistance r1, ramenant donc la sortie du comparateur 2 à la valeur 1 du moins tant que K.la(r1.r2)/(r1 +r2) est inférieur à Vr. De plus, pendant les 10 ms de l'état quasi-stable de la bascule 7, le "1 logique" appliqué par cette bascule sur l'entrée directe de la porte 4, maintient la sortie de cette porte au "1 logique" empêchant ainsi qu'un nouveau changement de 1 à 0 de la sortie du comparateur 2 puisse autoriser, par un front de 0 à 1 sur l'entrée de commande de la bascule 5, un nouveau branchement pendant 220 μs de la résistance r2 sur la résistance r1. Ceci revient à dire que, à la suite de la première durée de 220μs, les moyens, comportant en particulier les éléments 4, 5, Tr1, Tr2, r1, qui ont permis le dépassement, sont inhibés par des moyens comportant en particulier les éléments 6 et 7 ; cette seconde durée, comptée à partir de la fin de l'autorisation de dépassement, c'est-à-dire après la fin de la première durée, vaut 10 ms-220 μs dans l'exemple décrit.

La présente invention n'est pas limitée à l'exemple décrit et trouve son application là où il est demandé à une alimentation à découpage de fournir, pendant de très brefs instants, une puissance plus importante qu'en régime normal de fonctionnement. Les moyens à mettre en oeuvre doivent autoriser un dépassement du régime normal de fonctionnement mais en le limitant en amplitude, en durée et en fréquence maximale de répétition à des valeurs acceptables pour l'alimentation ; de tels moyens peuvent être conçus de différentes manières par l'homme du métier en particulier à partir de lignes à retard et non de bascules monostables ; dans l'exemple décrit l'amplitude était réglée par (r1.r2)/(r1 +r2), la durée était celle de l'état quasi-stable de la bascule 5 et la fréquence de répétition maximale avait pour période la durée de l'état quasi-stable de la bascule 7.

## Revendications

1. Alimentation continue à découpage comportant un circuit de redressement (T, D1, D2) pour fournir un premier courant (la), un filtre passe-bas (L, C) pour recevoir le premier courant et délivrer un second courant (lb) sur des bornes de sortie de l'alimentation, des moyens de commande comportant des moyens de comparaison (2, Vr, r1) pour surveiller le premier courant et, lorsque la valeur du premier courant est au moins égale à une valeur de référence (Vr/K.r1), délivrer un signal de blocage (G=0) pour bloquer le circuit de redressement, **caractérisée par le fait qu'**elle comporte un premier moyen (5) produisant un premier retard, branché à la sortie des moyens de comparaison et déclenché par le franchissement d'un premier seuil (Ip) par le premier courant (la), ce premier moyen commandant (Tr1, Tr2, un dispositif (2) augmentant ladite valeur de référence (Vr(r1+r2)/K.r1.r2), et **par le fait qu'**elle comporte un second moyen (7) produisant un second retard, relié au premier moyen de retard et inhibant celui-ci à la fin dudit premier retard.

2. Alimentation selon la revendication 1, **caractérisée par le fait que** ladite valeur de référence est déterminée par une première résistance (r1) reliée à une entrée des moyens de comparaison et que le dispositif augmentant cette valeur de référence est une seconde résistance (r2) commutée en parallèle avec la première résistance sous l'effet du signal de sortie du premier moyen de retard.

**3.** Alimentation selon la revendication 1 ou 2, **caractérisée par le fait que** les moyens de retard sont des bascules monostables.

**4.** Alimentation selon la revendication 1 ou 2, **caractérisée par le fait que** les moyens de retard sont des lignes à retard.

**5.** Alimentation selon l'une des revendications précédentes, **caractérisée en ce que**, étant destinée à fournir l'énergie nécessaire à l'amplification d'un signal image en télévision, elle est réglée avec une seconde durée inférieure à la durée d'une trame de télévision et une première durée de valeur très inférieure à la seconde durée.

**Patentansprüche**

**1.** Gleichstromversorgung mit Strombegrenzung, mit einer Gleichrichtungsschaltung (T, D1, D2) zur Lieferung eines ersten Stromes (Ia), einem Tiefpaß-Filter (L, C), um den ersten Strom aufzunehmen und einen zweiten Strom (Ib) an den Außenanschlüssen der Versorgung abzugeben, Steuerungsmitteln, die Vergleichsmittel (2, Vr, r1) aufweisen, um den ersten Strom zu überwachen und ein Unterbrechungssignal (G = 0) zur Unterbrechung der Gleichrichtungsschaltung auszugeben, wenn der Wert des ersten Stromes wenigstens einem Referenzwert (Vr/Kr1) entspricht, **dadurch gekennzeichnet, daß** sie ein erstes Mittel (5) aufweist, das eine erste Verzögerung erzeugt, mit dem Ausgang der Vergleichsmittel verbunden ist und ausgelöst wird, wenn der erste Strom (Ia) eine erste Schwelle (Ip) überschreitet, wobei das erste Mittel eine Vorrichtung (2) steuert (Tr1, Tr2), die den Referenzwert (Vr (r1+r2)/Kr1.r2) erhöht, und daß sie ein zweites Mittel (7) aufweist, das eine zweite Verzögerung erzeugt, mit dem ersten Verzögerungsmittel verbunden ist und dieses am Ende der ersten Verzögerung sperrt.

**2.** Versorgung nach Anspruch 1, **dadurch gekennzeichnet, daß** der Referenzwert durch einen ersten Widerstand (r1) bestimmt ist, der mit einem Eingang der Vergleichsmittel verbunden ist, und daß die Vorrichtung, die diesen Referenzwert erhöht, ein zweiter Widerstand (r2) ist, der unter der Wirkung des Ausgangssignals des ersten Verzögerungsmittels parallel zu dem ersten Widerstand geschaltet ist.

**3.** Versorgung nach dem Anspruch 1 oder 2, **dadurch gekennzeichnet, daß** die Verzögerungsmittel monostabile Kippstufen sind.

**4.** Versorgung nach Anspruch 1 oder 2, **dadurch ge-**

**kennzeichnet, daß** die Verzögerungsmittel Verzögerungsleitungen sind.

**5.** Versorgung nach einem der vorhergehenden Ansprüche, **dadurch gekennzeichnet, daß** sie, da sie die zur Verstärkung eines Fernsehbildsignals erforderliche Energie liefern soll, mit einer zweiten Dauer, die kürzer als die Dauer eines Fernseheinzelbildes ist, sowie mit einer ersten Dauer, deren Wert kleiner ist als die zweite Dauer, geregelt ist.

**Claims**

**1.** Chopped DC power supply comprising a rectifying circuit (T, D1, D2) for providing a first current (Ia), a low-pass filter (L, C) for receiving the first current and delivering a second current (Ib) on output terminals of the power supply, control means comprising comparison means (2, Vr, r1) for monitoring the first current and, when the value of the first current is at least equal to a reference value (Vr/K.r1), delivering a turn-off signal (G=0) for turning off the rectifying circuit, **characterized in that** it comprises a first means (5) producing a first delay, connected to the output of the comparison means and triggered by the crossing of a first threshold (Ip) by the first current (Ia), this first means controlling (Tr1, Tr2) a device (2) increasing the said reference value (Vr (r1+r2)/K.r1.r2), and **in that** it comprises a second means (7) producing a second delay, linked to the first means of delay and disabling the latter at the end of the said first delay.

**2.** Power supply according to Claim 1, **characterized in that** the said reference value is determined by a first resistor (r1) linked to an input of the comparison means and that the device increasing this reference value is a second resistor (r2) switched in parallel with the first resistor under the effect of the output signal from the first means of delay.

**3.** Power supply according to Claim 1 or 2, **characterized in that** the means of delay are monostable flip-flops.

**4.** Power supply according to Claim 1 or 2, **characterized in that** the means of delay are delay lines.

**5.** Power supply according to one of the preceding claims, **characterized in that**, being intended to provide the energy required for the amplification of a television picture signal, it is adjusted with a second duration less than the duration of a television frame and a first duration of much lesser value than the second duration.

FIG.1

FIG.2

FIG.3